# EUROPÄISCHE PATENTANMELDUNG

(11) **EP 3 276 546 A1**
(43) Veröffentlichungstag der Anmeldung: **31.01.2018**
(21) Anmeldenummer: 16181639.2
(22) Anmeldetag: 28.07.2016
(51) Int. Cl.: G06Q 10/06, G06Q 30/06

(54) **COMPUTERIMPLEMENTIERTES VERFAHREN ZUR BEREITSTELLUNG VON GEGENSTÄNDEN UNTER BERÜCKSICHTIGUNG DER ANFORDERUNGEN EINER VIELZAHL VON PARTEIEN**

(71) Anmelder: Elker, Olaf, 47441 Moers (DE)
(72) Erfinder: Elker, Olaf, 47441 Moers (DE)
(74) Vertreter: Gille Hrabal

(57) **Zusammenfassung**

Computerimplementiertes Verfahren zur Bereitstellung von Gegenständen unter Berücksichtigung der Anforderungen einer Vielzahl von Parteien, mit einer auf einem Computer angezeigten Abfolge von Masken, in welche Daten von den Parteien abgefragt und von diesen eingegeben werden, welche die Anforderungen oder Eigenschaften jeder einzelnen Partei repräsentieren, mit den anspruchsgemäßen Schritten.

## Beschreibung

In einer zunehmend komplexer werdenden Welt mit ihrer unüberschaubaren Auswahl an Anforderungen und Gegenständen, ist es notwendig, die Anforderungen mehrerer Parteien bei der Bereitstellung von Gegenständen zu berücksichtigen. In der Praxis scheitert dies häufig an mangelnder eindeutiger Formulierung der Anforderungen, Abstimmung zwischen den Parteien und fristgerechter Bereitstellung der auf die Anforderungen passenden Gegenstände. Daher stehen zum Zeitpunkt, wenn die Gegenstände benötigt werden, diese häufig nicht bereit oder Gegenstände bereit, die nicht geeignet sind. Letztere haben dann unnötige Kosten und Bemühungen verursacht und müssen entsorgt oder gelagert werden. Die Bereitstellung von Gegenständen ist also häufig nicht optimiert bzw. es wird zu wenig oder zu viel hergestellt.

Auch unternehmensintern laufen diese Prozesse oft nicht optimal ab: Beispielsweise spielen bei der Beschaffung einer Werkzeugmaschine sowohl strategische und finanzielle Aspekte, aber auch technische Aspekte eine Rolle. Die Geschäftsführung formuliert daher die Anforderungen anders als der Maschinenbediener und legt daher Schwerpunkte auf Anforderungen, die ihnen vertraut sind. Der Maschinenbediener sieht dagegen lediglich praktisch technische Aspekte. Mangels gemeinsamer Sprache, Begegnungen und Austausch, werden diese Informationen in der Praxis selten miteinander abgeglichen.

Diese fehlerhafte Bereitstellung von Gegenständen findet sich auch bei Großprojekten, bei welchen mangels Abstimmung Gegenstände mehrfach angeschafft werden oder letztlich fehlen. Gleiches gilt sogar in vergleichsweise überschaubaren Bereichen, z. B.: innerhalb der Familie oder Lebensgemeinschaften. Ein computerimplementiertes Verfahren, welches die Projektbeteiligten implementieren, oder welches Privatleuten oder Unternehmen zur Nutzung angeboten wird, könnte helfen, die während eines Abstimmungsprozesses anfallenden zu speichernden und zu übertragenden Datenmengen zu reduzieren.

Es ist daher Aufgabe in der vorliegenden Erfindung, ein verbessertes computerimplementiertes Verfahren zur Bereitstellung von Gegenständen unter Berücksichtigung der Anforderungen einer Vielzahl von Parteien zu schaffen.

Diese Aufgabe wird gelöst durch ein computerimplementiertes Verfahren mit den Merkmalen des Hauptanspruchs. Vorteilhafte Ausgestaltungen sind Gegenstand der Unteransprüche.

Das erfindungsgemäße computerimplementierte Verfahren ermöglicht eine Bereitstellung von Gegenständen unter Berücksichtigung der Anforderungen einer Vielzahl von Parteien. Dazu wird auf einem Computer eine Abfolge von Masken dargestellt, in welchen Daten von den Parteien abgefragt und von diesen eingegeben werden können. Diese Daten verkörpern die Anforderungen oder Eigenschaften jeder einzelnen Partei. Eine Eigenschaft der Parteien kann z. B.: sein, dass ein Geschäftsführer und ein Werkzeugmaschinenbediener teilnehmen. Es können beliebig viele Parteien teilnehmen, aber mindestens zwei Parteien sind notwendig und anspruchsgemäß wird das Verfahren für mindestens zwei Parteien beansprucht, ohne sich auf zwei Parteien zu beschränken.

Das Verfahren startet auf dem Computer der ersten Partei: beispielsweise startet der GF das Verfahren auf seinem Computer und die nachfolgenden Schritte erfolgen auf diesem Computer, unterbrochen durch Eingaben von Daten durch die erste Partei:
Zunächst wird eine erste Maske angezeigt, in welcher Eigenschaften aller Parteien durch die erste Partei eingegeben werden kann. Beispielsweise bietet diese Maske u. a. die Kombination "Geschäftsführer/ Maschinenbediener" als Auswahlfeld an. Der GF wählt diese aus und die Auswahl wird an den Computer übertragen. Diese Vorauswahl ermöglicht bereits den Ausschluss diverser Masken und reduziert damit das auszutauschende Datenvolumen.

In Abhängigkeit von dieser Eigenschaften aller Parteien und auch in Abhängigkeit der Eigenschaft der ersten Partei, wird nun eine zweite Maske angezeigt, in welcher Anforderungen der ersten Partei durch die erste Partei eingegeben werden kann und diese an den Computer übertragen werden. Beispielsweise wird hier berücksichtigt, dass die erste Partei der GF ist und dieser GF, aber auch der Maschinenbediener, ihre Anforderungen eingeben werden. Dazu passend wird nun eine Maske ausgewählt, welche aber zunächst auf den GF zugeschnitten ist, und daher eher die Eingabe wirtschaftlicher Anforderungen verlangt.

Unter Anforderungen im Sinn der Erfindung fallen insbesondere Forderungen (z. B.: "muss auf jeden Fall pneumatisch sein"), Rahmenbedingungen ("Budget", Lieferzeitpunkt"), Wünsche ("Wenn es geht, möglichst Made in Germany") oder Ausschlüsse ("keinesfalls aus China"). Die Anforderungen werden vorzugsweise zur Auswahl in der Maske angezeigt und können auf bekannte Weise ausgewählt oder quantifiziert werden. Es können natürlich auch mehrere Masken zur Eingabe der Anforderungen angezeigt werden.

Nach Abschluss der Eingabe der Anforderungen und deren Übermittlung an den Computer, werden durch den Computer Zugangsdaten bereitgestellt, welche es der weiteren Partei ermöglichen, ihre Anforderungen einzugeben. Das bedeutet, dass unter Verwendung dieser Zugangsdaten auf einem Computer der weiteren Partei das Verfahren fortgeführt werden kann, um die nachfolgenden Schritte auszuführen.

Zugangsdaten können alles sein, was es der weiteren Partei ermöglicht, das obige Verfahren fortzusetzen: Beispielsweise kann ein geeigneter Direktlink erzeugt werden, welchen die erste Partei an die zweite Partei weitergeben kann. Oder es kann ein ausführbares Programm unter Verwendung der bereits erfassten Daten erzeugt werden. Oder es wird eine Paarung aus Username und Passwort erzeugt und an die zweite Partei gesandt. Die erste Partei kann auch Kontodaten der weiteren Partei angeben, z. B.: einen Facebook ID oder eine E-Mail Adresse, so dass der Computer ein individuelles Link an diese zweite Partei senden kann.

In jedem Fall läuft bei der weiteren Partei auf deren Computer mittels der erhaltenen Zugangsdaten aus dem vorherigen Schritt das Verfahren weiter und die nachfolgenden Schritte auf diesem Computer erfolgen unterbrochen durch Eingaben der zweiten Partei, hier beispielsweise des Maschinenbedieners:
Zunächst wird eine dritte Maske durch den Computer ausgewählt, in Abhängigkeit von den Eigenschaften aller Parteien und in Abhängigkeit der Eigenschaft der zweiten Partei; diese ist in Fortführung des Beispiels nun der Maschinenbediener. Diese dritte Maske wird nun angezeigt und ermöglicht der weiteren Partei die Eingabe ihrer Anforderungen, welche dann an den Computer übertragen werden. In unserem Beispiel werden vom Maschinenbediener eher technische Anforderungen abgefragt, z. B.: Drehzahlbereich, Anschlusswerte, Leistung, etc.

Sind für alle im ersten Schritt angegebenen Parteien deren jeweilige Anforderungen auf dem Computer gespeichert. Erfindungsgemäß ist das Verfahren nicht auf zwei Parteien beschränkt und es könnte nun auch eine weitere Partei, etc. Anforderungen stellen, sofern diese im ersten Schritt angegeben wurden, z. B.: als Kombination "GF / technischer Leiter / Maschinenbediener"

In Abhängigkeit von den übertragenen Anforderungen aller Parteien erzeugt der Computer eine Liste von Gegenständen, welche wahrscheinlich den Anforderungen aller Parteien genügen. Diese Liste dient der Beschränkung der grundsätzlich zur Verfügung stehenden geeigneten und ungeeigneten Gegenstände auf eine überschaubare Anzahl von geeigneten Gegenständen, z. B.:
- Maschine 1 mit Anschlussleistung 10 kW; oder
- Maschine 2, wie Maschine 1, aber mit Anschlussleistung 20 kW

Ein Gegenstand im Sinn der Erfindung kann aber auch ein Parameter eines Gegenstandes sein, beispielsweise kann also zur Auswahl stehen bei der Maschine 1:
- 10 KW oder
- 20 KW.

Es handelt sich also nur noch um einen vergleichsweise kleinen Datensatz aus der Menge aller grundsätzlich bereitstehender Gegenstände. Gegenstände im Sinn der Erfindung können alle handelbare Güter sein, beispielsweise Programme, Dateien, elektronische Inhalte, etc.

In einem nächsten Schritt erfolgt eine Benachrichtigung von zumindest einer der Parteien, die Liste aufrufbar ist oder deren Übersendung an zumindest eine der Parteien. In der Regel ist es aber zweckmäßig, dass alle Parteien die Liste erhalten. Dieser Schritt kann auf allen EDVtypischen Wegen erfolgen mit bereits vorhandenen Technologien, sowie künftigen, z. B.: als E-Mail mit Anhang oder mit HTML Text; als E-Mail mit Aufforderung sich auf einer Webseite einzuloggen, um die Liste zu sehen, als Direktlink auf die Liste, etc. Jede Partei kann also die Liste sehen. Übermittlung bedeutet also nicht zwangsläufig, dass diese Liste tatsächlich beim Empfänger landet oder angezeigt wird. Ausreichend ist, dass er die Möglichkeit zur Einsicht erhält, z. B.: mittels Link oder nach einem erneuten Einloggen.

Erfindungsgemäß ist es aber ausreichend - wenn auch nicht optimal - dass die Liste zumindest auf einem Computer von zumindest einer der Parteien dargestellt wird, z. B.: beim GF.

Diese Partei kann nun eine Auswahl von Gegenständen aus der Liste vornehmen und die Auswahl durch besagte Partei wird nun an den Computer übermittelt. Der GF bleibt im Beispiel der Entscheider, kennt jedoch jetzt die Anforderungen des Maschinenbedieners besser.

Danach erlaubt der Computer die Auslösung des Transports der ausgewählten Gegenstände an eine der Parteien, insbesondere die besagte einer der Parteien. Es handelt sich in der Regel um eine Art Bestellung, die in Papierform, als Datei oder Email dorthin gelangt, wo die Gegenstände bereitgestellt werden können. Im Fall von Dateien als Gegenständen können diese sogar unmittelbar automatisch an die besagte Partei oder alle Parteien vom Computer versendet werden. Dieses hat Vorteile insbesondere bei preiswerten Waren, welche daher keinen separaten aufwendigen Bestellvorgang erfordern, oder bei einer großen Anzahl von Waren und bei sehr komplexen Gegenständen mit zahlreichen Parametern.

Der Begriff Computer im Sinn der Erfindung ist nicht auf ein einzelnes Gerät beschränkt, auf welchem das Verfahren vollständig durchgeführt werden muss, z. B.: indem die Parteien nacheinander ihre Anforderungen eingeben. Vielmehr kann das Verfahren auf einem System von Computern, z. B.: in einem Netzwerk, im Internet oder einer Cloud verteilt und ausgeführt werden: beispielsweise können die einzelnen Parteien unterschiedliche Computer, Tablets, Smartphones oder andere Geräte benutzen und die Daten werden über das Internet oder ein Intranet gesendet und empfangen. Dabei kann ein Server bereitstehen, der das Verfahren durchführt, durch Senden und Empfangen von Daten mit den jeweiligen Computern der Nutzer, z. B.: unter Nutzung von Webbrowsern. Es können auch Programme oder Skripte auf den Computern oder Smartphones lauffähig sein, welche die Masken anzeigen, Daten sammeln und diese dann an einen Server übermitteln. Wenn bei der Erfindung von einem Computer einer Partei die Rede ist, bedeutet das nicht zwangsläufig, dass auch unmittelbar dort die Speicherung der Daten oder die Auswahl der Listen auf diesem Computer erfolgt. Vielmehr ist damit gemeint, dass zwingend nur die Handhabung durch die Partei, also die Anzeige der Masken und die Eingabe der Anforderungen / Eigenschaften auf diesem Computer erfolgt. Der Computer der Partei ist also lediglich die Mensch-Maschine-Schnittstelle. Das eigentliche Computerprogramm ist also nicht notwendigerweise an einen bestimmten Computer gebunden, sondern die Computer des Systems vermögen so miteinander wechselzuwirken, das das Verfahren durchführbar ist.

Vorzugsweise sind die Masken für beide Parteien identisch, wenn die Eigenschaften der Parteien identisch sind. Wenn beide Parteien also GF sind, erhalten beide identische Masken, da beide sich mit ähnlichen Anforderungen befassen.

Vorzugsweise wird in einem weiteren Schritt eine weitere Maske auf dem Computer für alle Parteien identisch dargestellt, auch wenn für die Parteien unterschiedliche Eigenschaften an den Computer übertragen wurden. Damit können Anforderungen abgefragt werden, welche von den unterschiedlichen Parteien gleichermaßen beurteilt werden können, z. B.: geschmackliche Fragen.

Grundsätzlich ist denkbar, dass mit einer Maske nur eine Anforderung abgefragt wird. Leichtere Bedienbarkeit ist aber gegeben, wenn in Masken mehrere Anforderungen eingegeben werden können.

Zur Vertiefung von Anforderungen können im Bedarfsfall zu einer der Masken eine oder mehrere Folgemasken zur Eingabe weiterer Anforderungen und/ oder Unteranforderungen vorgesehen sein. Dadurch bleibt die Bedienung angenehm, da der Nutzer nicht von einer unübersichtlichen Anzahl von Fragen verwirrt wird. Ferner wird die Menge zu speichernder und zu übertragenden Daten reduziert.

Das gelingt besonders gut, wenn die Folgemaske vom Computer in Anhängigkeit bereits eingegebener Anforderungen ausgewählt und angezeigt wird. Diese Folgemaske erscheint also nur wenn in einer vorherigen Maske gewisse Anforderungen gestellt werden, die noch weiter präzisiert werden müssen.

Grundsätzlich können die Anforderungen auf beliebige Weise von den Parteien in die Maske eingegeben werden. Eine Strukturierung ist aber bevorzugt und erleichtert die Bedienung. Daher ist mindestens eine der Masken derart, dass die Eigenschaften und / oder Anforderungen als Auswahl dargestellt werden und insbesondere durch Drop-Down-Menüs, Clickbox, Eingabefeld, Slider und / oder ähnliches ausgewählt und / oder quantifiziert werden können.

Nachfolgend wir erläutert, nach welchen allgemeinen Regeln die Erzeugung der Liste von Gegenständen durch den Computer "in Abhängigkeit von den übertragenen Anforderungen aller Parteien erfolgt". Um einerseits die gewünschte Beschränkung der in Frage kommenden Gegenstände und damit eine Reduktion der zu übertragenden und speichernden Daten zu erreichen, ohne aber die Kreativität und Offenheit des Abstimmungsprozesses zwischen den Parteien stark zu behindern, werden eine oder mehrere der nachfolgenden Regeln zur Aufnahme eines Gegenstandes eingesetzt:
- Eine Aufnahme eines Gegenstandes in die Liste erfolgt nur, wenn alle Parteien eine bestimmte Anforderung ausgewählt haben. Es werden also die Gemeinsamkeiten herausgestellt. Dies beschränkt die Auswahl u. U. besonders drastisch und ist nicht für alle Anforderungen sinnvoll einsetzbar. Im zwischenmenschlichen Umgang kann dadurch aber auch eine unerwünschte Offenbarung von Anforderungen, die die jeweils andere Partei streng missbilligt, verhindert werden. Beide Parteien können unbedenklich Anforderungen stellen, die nur im Konsensfall der anderen Partei offenbart werden, was die Bereitschaft zur Offenheit beider Parteien bei der Stellung von Anforderungen erhöht.
- Aufnahme eines Gegenstandes in die Liste, wenn zumindest eine der Parteien eine bestimmte Anforderung ausgewählt hat. Dabei handeltet sich insbesondere um Vorschläge und Anregungen, die der anderen Partei im Rahmen der Liste zur Kenntnis gebracht werden. Dies erhöht die Kreativität bei der Findung der passenden Gegenstände.
- Nicht-Aufnahme eines Gegenstandes in die Liste, wenn eine der Parteien eine bestimmte Anforderung als unakzeptabel ausgewählt hat. Hierbei handelt es sich um ein NOGO Kriterium, dass keinesfalls realisiert werden soll, z. B.: Überschreitung eines Budgets. Im zwischenmenschlichen Umgang können damit auch nachteilige Offenbarungen zwischen Parteien verhindert werden.

Das Verfahren ist insbesondere geeignet für große komplexe Projekte, beispielsweise Großbaustellen, bei denen eine optimale Abstimmung durch direkte Gespräche unmöglich erscheint und die Parteien überfordern würde bzw. die zwischen den Parteien auszutauschenden Datenmengen unnötig groß wären. Bei solchen Projekten liegt eine extreme Bandbreite von potentiell benötigten Gegenständen vor. Auch im kleinen Maßstab kann das Verfahren sinnvoll sein, um den Parteien die Formulierung von Anforderungen zu erleichtern, z. B.: bei heiklen Themen, bei welchen sich keine Partei mit ihrer Einstellung außerhalb der Gruppe exponieren möchte.

## Patentansprüche

1. Computerimplementiertes Verfahren zur Bereitstellung von Gegenständen unter Berücksichtigung der Anforderungen einer Vielzahl von Parteien,
mit einer auf einem Computer angezeigten Abfolge von Masken, in welchen Daten von den Parteien abgefragt und von diesen eingegeben werden, welche die Anforderungen oder Eigenschaften jeder einzelnen Partei repräsentieren,
mit folgenden Schritten:
a. Starten des Verfahrens auf einem Computer einer ersten Partei:
i. Darstellen einer ersten Maske, in welche Eigenschaften aller Parteien durch die erste Partei eingegeben werden können und Speichern der von der ersten Partei eingegebenen Eigenschaften auf dem Computer;
ii. Auswahl einer zweiten Maske durch den Computer, in Abhängigkeit von den Eigenschaften aller Parteien und in Abhängigkeit der Eigenschaft der ersten Partei;
iii. Darstellen der zweiten Maske, in welche Anforderungen der ersten Partei durch die erste Partei eingegeben werden können und Speichern der von der ersten Partei eingegebenen Anforderungen auf dem Computer;
iv. Bereitstellen von Zugangsdaten, welche es einer weiteren Partei ermöglicht, die nachfolgenden Schritte ausführen zu lassen und vorzugsweise Übermittlung dieser Zugangsdaten an die weitere Partei;
b. Fortführung des Verfahrens auf einem Computer der weiteren Partei unter Nutzung der der Zugangsdaten aus dem vorherigen Schritt a. iv):
i. Auswahl einer dritten Maske durch den Computer, in Abhängigkeit von den Eigenschaften aller Parteien und in Abhängigkeit der Eigenschaft der weiteren Partei;
ii. Darstellen der dritten Maske, in welche Anforderungen der weiteren Partei durch die weitere Partei eingegeben werden können und Speichern der von der weiteren Partei eingegebenen Anforderungen auf dem Computer;
c. Erzeugung einer Liste von Gegenständen durch den Computer in Abhängigkeit von den auf dem Computer gespeicherten Anforderungen aller Parteien und vorzugsweise Eigenschaften aller Parteien;
d. Benachrichtigung von zumindest einer der Parteien, dass Liste aufrufbar ist oder Übersendung der Liste an zumindest eine der Parteien.
e. Darstellung der Liste auf einem Computer von der besagten einer der Parteien;
f. Bereitstellen von Auswahlmöglichkeiten von Gegenständen aus der Liste durch besagte einer der Parteien und Speicherung der durch die besagte einer der Parteien erfolgten Auswahl auf dem Computer;
g. Auslösung des Transports der ausgewählten Gegenstände an eine der Parteien, insbesondere die besagte einer der Parteien.

2. Verfahren nach Anspruch 1, wobei die Masken, in welche Anforderungen eingegeben werden können, identisch sind, wenn die Eigenschaften der Parteien identisch sind.

3. Verfahren nach einem der vorherigen Ansprüche, wobei mindestens eine weitere Maske auf dem Computer für alle Parteien identisch dargestellt wird, auch wenn für die Parteien in Schritt a. i.) unterschiedliche Eigenschaften auf dem Computer gespeichert wurden.

4. Verfahren nach einem der vorherigen Ansprüche, wobei mindestens in eine der Masken mehrere Anforderungen eingegeben werden.

5. Verfahren nach einem der vorherigen Ansprüche, wobei mindestens eine der Masken eine Folgemaske zur Eingabe weiterer Anforderungen und/ oder Unteranforderungen umfasst.

6. Verfahren nach dem vorherigen Anspruch, wobei die Folgemaske vom Computer in Anhängigkeit bereits eingegebener Anforderungen ausgewählt und angezeigt wird.

7. Verfahren nach einem der vorherigen Ansprüche, wobei mindestens eine der Masken derart ist, dass die Eigenschaften und/ oder Anforderungen als Auswahl dargestellt werden und insbesondere durch Drop-Down-Menüs, Clickbox, Eingabefeld, Slider und / oder ähnliches ausgewählt und/ oder quantifiziert werden können.

8. Verfahren nach einem der vorherigen Ansprüche, wobei im Schritt c.) bei der Erzeugung der Liste von Gegenständen durch den Computer in Abhängigkeit von den auf dem Computer gespeicherten Anforderungen aller Parteien eine oder mehrere der nachfolgenden Regeln zur Aufnahme eines Gegenstandes in die Liste befolgt wird:
- Aufnahme eines Gegenstandes in die Liste, wenn für alle Parteien eine bestimmte Anforderung gespeichert ist;
- Aufnahme eines Gegenstandes in die Liste, wenn zumindest für eine der Parteien eine bestimmte Anforderung gespeichert ist; und/oder
- Nicht-Aufnahme eines Gegenstandes in die Liste, sofern für eine der Parteien eine bestimmte Anforderung als unakzeptabel gespeichert ist.

9. Computerprogramm, Datenträger mit darauf gespeichertem Computerprogramm oder Computersystem mit darauf lauffähigem Computerprogramm zur Durchführung des Verfahrens nach einem der vorherigen Ansprüche 1-8.

10. Computersystem nach Anspruch 9, wobei das Computersystem eine Vielzahl von über ein Netzwerk verbundenen Computern aufweist und das Verfahren auf einem Computer durchgeführt wird oder dessen Durchführung auf die Computer verteilt ist.
